(19) Europäisches Patentamt
European Patent Office
Office européen des brevets

(11) Veröffentlichungsnummer: **0 037 798**
**B1**

(12) # EUROPÄISCHE PATENTSCHRIFT

(45) Veröffentlichungstag der Patentschrift: **18.05.83**

(51) Int. Cl.³: **C 09 B 29/20** // C09B67/46

(21) Anmeldenummer: **81810124.8**

(22) Anmeldetag: **26.03.81**

(54) **Neue Azopigmente.**

(30) Priorität: **01.04.80 GB 8010884**

(43) Veröffentlichungstag der Anmeldung: **14.10.81 Patentblatt 81/41**

(45) Bekanntmachung des Hinweises auf die Patenterteilung: **18.05.83 Patentblatt 83/20**

(84) Benannte Vertragsstaaten: **CH DE FR GB IT LI**

(56) Entgegenhaltungen:
**SOCIETY OF DYERS AND COLOURISTS, "Colour Index", Ed. 3, Band 4 "Chemical Constitutions", 1971 American Association of Textile Chemists & Colorists; Lund Humphries Bradford, London, G.B.**

(73) Patentinhaber: **CIBA-GEIGY AG, Patentabteilung Postfach, CH-4002 Basel (CH)**

(72) Erfinder: **Irvine, Alexander McHugh, 3, Findhorn Avenue Dean Park, Renfrewshire Schottland (GB)**
Erfinder: **Campbell, Colin Dennis, Dr., 1, Boghead Beith, Ayrshire Schottland (GB)**

**EP 0 037 798 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Neue Azopigmente

Vorliegende Erfindung betrifft ein neues Monoazopigment.

Einen β-Naphtholrest enthaltende Azopigmente sind seit vielen Jahren bekannt. Darunter lassen sich solche, die auf aromatischen Kohlenwasserstoffringsystemen basieren, im allgemeinen in zwei Haupttypen einteilen. Der erste Typ enthält ausser dem β-Naphtholring einen aromatischen Ring, und typische Beispiele dafür sind C.I.Pigment Orange 5 der Konstitution:

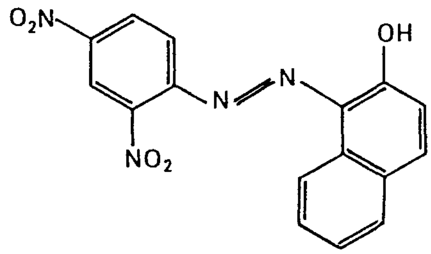

(orange)

und C.I. Pigment Rot 4 der Konstitution:

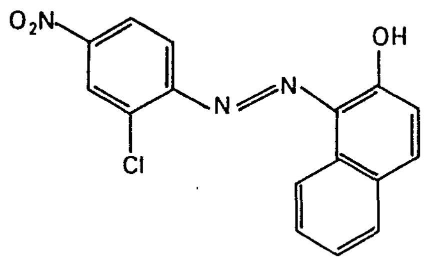

(bläulich orange)

Der zweite Typ ist allgemein als BON-Arylamide bekannt, und typische Beispiele dafür sind C.I. Pigment Rot 2 der Konstitution:

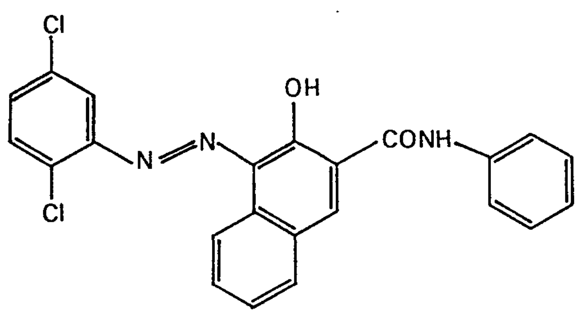

(rot)

und C.I. Pigment Rot 112 der Konstitution:

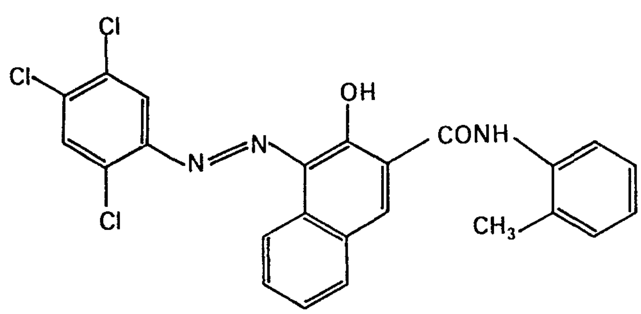

(rot)

Zwischen diesen beiden Pigmenttypen besteht ein wichtiger Unterschied im Hinblick auf ihre Eignung für Lackierungen. So sind BON-Arylamide in Allzweckindustrieanstrichmittelsystemen, bei denen ein Einbrennvorgang bei erhöhten Temperaturen stattfindet, sowie in Öldruckfarben und lufttrocknenden Innenanstrichen verwendbar, während jene Pigmente des ersten Typs zur Verwendung in Industrieanstrichmitteln nicht genügend stabil sind.

Es wurde nun ein neues Azopigment vom BON-Arylamidtyp hergestellt, das orangefarbig ist, ein überraschender Farbton für diese Pigmente, und das zur Verwendung in Industrieanstrichmitteln

geeignet ist und auch Anstrich- und Druckfarben mit höherer Farbstärke und guter Hitzebeständigkeit liefert.

Gegenstand vorliegender Erfindung ist demnach ein Pigment der Formel I

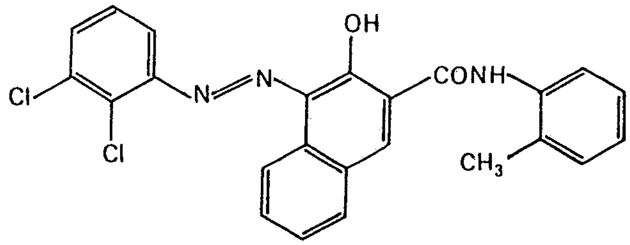

(I)

das orangefarbig ist.

Das Pigment lässt sich dadurch herstellen, dass man diazotiertes 2,3-Dichloranilin auf Napthhol AS-D(2-Hydroxy-3-carboxynaphthalin-(2-methylphenyl)-amid) kuppelt. Das 2,3-Dichloranilin lässt sich nach der herkömmlichen Diazotierungsmethode unter Verwendung von Salzsäure und Natriumnitrit diazotieren. Die Kupplungskomponente kann man in üblicher Weise in einer alkalischen Lösung unter Verwendung von Natriumhydroxyd auflösen.

Die herkömmliche Verfahrensweise bei der Kupplungsreaktion für ein derartiges Produkt besteht darin, dass man den pH der Lösung der Kupplungskomponente auf etwa pH 10 erniedrigt und dann die Lösung der Diazoverbindung mit der Geschwindigkeit, mit der sie von der Kupplungskomponente aufgenommen wird, zusetzt, wobei man wahlweise den pH auf etwa 10 hält oder ihn absinken lässt. Das Pigment der Formel I lässt sich nach dieser Methode herstellen. Es wude jedoch gefunden, dass die Kupplung sehr viel schneller als die herkömmliche Kupplung für derartige Produkte stattfindet, wenn man die Kupplungskomponente zunächst aus alkalischer Lösung bei einem sauren pH unter 3, vorzugsweise unter 2, durch Zugabe der alkalischen Lösung der Kupplungskomponente zu einer sauren Lösung ausfällt und anschliessend die entstandene Suspension auf einen zur Kupplung geeigneten pH, z.B. zwischen 5 und 11, vorzugsweise zwischen 6 und 11, und insbesondere 10, einstellt. Nach dieser Methode kann die Kupplung in etwa 30 Minuten ablaufen, gegenüber 1½ bis 2½ Stunden nach der herkömmlichen Methode.

Das erfindungsgemässe Pigment lässt sich in einer leicht dispergierbaren Form herstellen, die in der britischen Patentschrift Nr. 1 499 660 beschrieben und beansprucht ist. Gegenstand vorliegender Erfindung ist somit auch ein Präparat, das ein Pigment der obigen Formel I und minstens 5 Gew.-%, bezogen auf das Gewicht des Pigments, eines aus einem oder mehreren, sich von Äthylenoxyd ableitenden, vorwiegend nicht-ionogenen Polyäthertensiden und aus einer polymeren Carbonsäure mit einem Molekulargewicht der freien Säure von mindestens 1500 gebildeten Komplexes enthält.

Vorzugsweise enthält das Präparat 60 bis 95 Gew.-% Pigment und 40 bis 5 Gew.-% Komplex.

Da nicht-ionogene Tensid und die polymere Carbonsäure können während der Synthese vor, während oder nach der Kupplung dem Pigment bzw. dem Filterkuchen zugesetzt werden. Vorzugsweise wird die Kupplung in Gegenwart des nicht-ionogenen Tensids durchgeführt und die polymere Carbonsäure der entstandenen Pigmentsuspension zugesetzt und der Komplex bei saurem pH gebildet, bevor das Pigment entweder als Pulver oder als Filterkuchen isoliert wird.

Das nicht-ionogene Tensid soll unter alkalischen Bedingungen löslich und dazu fähig sein, mit der polymeren Carbonsäure unter sauren Bedingungen einen Niederschlag zu bilden. Solange die obigen Kriterien erfüllt sind, kann das Molekulargewicht zweckmässig im Bereich von 350 bis 8 000 000 liegen.

Als nicht-ionogenes Tensid kann beispielsweise Poly-(äthylenoxyd) mit einem Durchschnittsmolekulargewicht von 600 bis 1 000 000, ein polyäthylenoxyliertes Alkylphenol bzw. Alkohol oder Carbonsäure oder ein äthoxyliertes Amin vorliegen.

Das nicht-ionogene Tensid kann neben anderen Alkoxygruppen wie Propoxygruppen anionische und kationische Gruppen enthalten, solange der nicht-ionogene Charakter vorwiegt und das Tensid zur Bildung eines Niederschlags mit einer Polycarbonsäure fähig bleibt. Copolymere des Äthylenoxyds und Propylenoxyds lassen sich ebenfalls als nicht-ionogenes Tensid verwenden, wobei das Molekulargewicht vorzugsweise dann mindestens 600 beträgt.

Ein besonders zweckmässiges nicht-ionogenes Tensid ist äthoxyliertes Nonylphenol, das man gewünschtenfalls als Gemisch mit einem Blockcopolymer des Äthylenoxyds und Proylenoxyds einsetzen kann.

Unter polymerer Carbonsäure ist ein Homo- oder Copolymer zu verstehen, das sich von einer äthylenisch ungesättigten Mono- oder Polycarbonsäure bzw. deren Anhydrid oder einem zur Polymerbildung fähigen Halbester oder Salz davon ableitet. Das Homopolymer kann sich von einer ungesättigten Monocarbonsäure wie Acrylsäure, Methacrylsäure oder Crotonsäure, oder auch von einer Dicarbonsäure wie Maleinsäure ableiten. Das Copolymer lässt sich durch Copolymerisation einer oder mehrerer Monomerarten mit einer Carboxylgruppe, beispielsweise einer ungesättigten Monocarbonsäure wie Acrylsäure, Methacrylsäurc oder Crotonsäure oder einer ungesättigten Dicarbonsäure wie Maleinsäure, Itaconsäure, Aconitsäure oder Fumarsäure bzw. deren entsprechendem Anhydrid oder Halbester mit einer oder mehreren Vinylmonomerarten ohne Carboxylgruppe, beispielsweise Äthylen, Propylen, Diisobutylen, einem Acrylsäureester wie Methylacrylat, Äthylacrylat oder Butylacrylat, einem Methacrylsäureester wie Methylmethacrylat, Äthylmethacrylat, Butylmethacrylat oder Dodecylmethacrylat, einem Crotonsäureester wie Methylcrotonat, Äthylcrotonat oder Butylcrotonat, Acrylnitril, einem ungesättigten Säureamid wie Acrylamid, Methacrylamid oder Crotonamid, einer aromatischen Vinylverbindung wie Styrol oder α-Methylstyrol, einem Vinylhalogenid wie Vinylchlorid oder Vinylidenchlorid oder einem Vinylester wie Vinylformiat, Vinylacetat, Vinylpropionat, Vinylbutyrat, Vinylversatat («Versatat» ist von Versatic® abeleitet) oder Vinylstearat herstellen.

Beispiele für polymere Säuren sind Polymaleinsäure, Copolymere aus Methacrylsäure oder Acrylsäure mit wasserunlöslichen Monomeren wie Dodecylmethacrylat, Copolymere aus Äthylen und Maleinsäureanhydrid oder Copolymere aus Diisobutylen und Maleinsäureanhydrid. Die polymere Säure ist vorzugsweise Polyacrylsäure oder Polymethacrylsäure.

Das Molekulargewicht der polymeren Carbonsäure ist vorzugsweise mindestens 2000 und kann sogar bis 2 000 000 ragen, solange sie dazu fähig ist, unter sauren Bedingungen mit dem nichtionogenen Tensid einen Niederschlag zu bilden.

Die so erhaltenen Präparate lassen sich leicht in Systemen auf Wassergrundlage, wie Dispersionsfarben, dispergieren.

Die Erfindung wird durch die nachfolgenden Beispiele erläutert. Wenn nicht anders angegeben, bedeuten die Teile Gewichtsteile und die % Gew.-%.

Beispiel 1

Man gibt 8,1 Teile 2,3-Dichloranilin zu einer Lösung von 26,3 Teilen Salzsäure (36%-ig) in 20,9 Teilen warmem Wasser, rührt 30 Minuten und kühlt mit Eis auf 0°C.

3,45 Teile Natriumnitrit, in 17,5 Teilen Wasser gelöst, werden mit solcher Geschwindigkeit dazugegeben, dass während der Diazotierung des Amins ein geringer Überschuss salpetrige Säure verbleibt. Zur Entfernung jeglicher Spuren restlichen Amins wird die Lösung des Diazoniumsalzes filtriert.

Man erhitzt 136 Teile Wasser, 13,86 Teile Naphthol AS-D® (2-Hydroxy-3-carboxynaphthalin-(2-methylphenyl)-amid), 6,27 Teile Natriumhydroxid und 1,4 Teile Türkischrotöl (sulfiertes Rizinusöl) zum Sieden und rührt, wobei eine hellbraune Lösung entsteht, die filtriert und mit kaltem Wasser auf 50°C eingestellt wird, bevor man den pH mit verdünnter Essigsäure auf 10 erniedrigt. Dann setzt man im Verlauf von 2 Stunden die Lösung des diazotierten 2,3-Dichloranilins dazu, wobei die Temperatur auf 50°C und der pH durchwegs mit verdünnter Natronlauge je nach Bedarf auf 9–11 gehalten wird. Die orangefarbige Suspension wird dann mit verdünnter Salzsäure auf pH 6,5 gestellt, 30 Minuten auf 90–95°C erhitzt, filtriert und mit 1000 Teilen Wasser gewaschen. Beim Trocknen des Filterkuchens bei 50–60°C erhält man 21 Teile orangefarbiges Pulver, das dem Produkt der Formel I entspricht.

Beispiel 2

Man gibt 8,1 Teile 2,3-Dichloranilin zu einer Lösung von 16,5 Teilen Salzsäure (36%-ig) in 28 Teilen Wasser, rührt 30 Minuten und kühlt mit Eis auf 0°C. 3,48 Teile Natriumnitrit, in 17,5 Teilen Wasser gelöst, werden mit solcher Geschwindigkeit dazugegeben, dass während der Diazotierung des Amins ein geringer Überschuss salpetrige Säure verbleibt. Zur Entfernung jeglicher Spuren restlichen Amins wird die Lösung des Diazoniumsalzes dann filtriert.

Man erhitzt 130 Teile Wasser, 4,5 Teile Natriumhydroxyd, 1 Teil Türkischrotöl und 13,9 Teile Naphthol AS-D® (2-Hydroxy-3-carboxynaphthalin-(2-methylphenyl)-amid) zum Sieden und rührt, wobei eine hellbraune Lösung entsteht, die man mit kaltem Wasser auf 250 Volumenteile auffüllt.

1,5 Teile Natriumacetat-trihydrat und 15,3 Teile Salzsäure (36%-ig) werden in 250 Teilen Wasser gelöst. Man gibt die oben hergestellte Lösung von Naphthol AS-D® im Verlauf von 15 Minuten dazu und stellt die entstandene weisse Suspension mit 1,7 Teilen Natriumhydroxyd, in 17 Teilen Wasser gelöst, auf pH 10 ein. Nach 15 Minuten wird das diazotierte 2,3-Dichloranilin im Verlauf von 25 Minuten zugesetzt, wobei man den pH durchwegs durch gleichzeitigen Zusatz von verdünnter Natronlauge auf 10 hält. Nach 15 Minuten Rühren stellt man die Suspension auf pH 6,5 ein, erhitzt 30 Minuten auf 90–95°C, filtriert und wäscht mit 1000 Teilen Wasser. Beim Trocknen des Filterkuchens bei 50–60°C erhält man 21 Teile orangefarbiges Pulver, das dem Produkt der Formel I entspricht.

Beispiel 3

Man verfährt wie in Beispiel 2, jedoch unter Verwendung von 2 Teilen Türkischrotöl statt 1 Teil sowie unter Zugabe einer Lösung von 4,4 Teilen Staybelite-Harz® (hydrierte Abietinsäure) und 0,79 Teilen Kaliumhydroxyd in 100 Teilen Wasser nach der Kupplung und vor der Einstellung des pH auf 6,5. Die Suspension erhitzt man dann 30 Minuten auf 90–95°C, filtriert, wäscht mit Wasser chloridionenfrei und trocknet bei 50–60°C, wobei man 25 Teile einer resinierten Form des Produkts der Formel I erhält.

Beispiel 4

Man verfährt wie in Beispiel 3, jedoch unter Ersatz des Staybelite-Harzes® durch Pentalyn 255® (ein mit Pentaerythrit verestertes Maleinsäureharzkondensat), wobei man 25 Teile einer resinierten Form des Produkts der Formel I erhält.

Beispiel 5

Man gibt 4,86 Teile 2,3-Dichloranilin im Verlauf von 15 Minuten unter Rühren zu einer Lösung von

9,9 Teilen Salzsäure (36%-ig) in 16,8 Teilen Wasser und rührt noch weitere 30 Minuten. Zur Erniedrigung der Temperatur auf −2°C versetzt man mit Eis vor dem Zusatz einer Lösung von 2,09 Teilen Natriumnitrit in 10,5 Teilen Wasser, wobei die Geschwindigkeit der Zugabe so gesteuert wird, dass während der Diazotierung des Amins stets ein geringer Überschuss salpetrige Säure vorliegt. Die so erhaltene Lösung von diazotiertem 2,3-Dichloranilin rührt man 15 Minuten, filtriert zur Entfernung jeglicher Spuren restlichen Amins und füllt das Gesamtvolumen bei 0°C mit Eiswasser auf 150 Teile auf.

Man gibt 8,34 Teile Naphthol AS-D® (2-Hydroxy-3-carboxynaphthalin-(-2-methylphenyl)-amid) zu einer Lösung von 2,7 Teilen Natriumhydroxyd und 0,6 Teilen Türkischrotöl (sulfiertes Rizinusöl) in 78 Teilen Wasser und erhitzt die Suspension mit Dampf zum Sieden, wobei eine schwach braune Lösung entsteht, die man dann mit kaltem Wasser auf 150 Teile Gesamtvolumen auffüllt.

Man löst 0,9 Teile Natriumacetat-trihydrat in 150 Teilen Wasser und versetzt mit einer Lösung von 2,44 Teilen Synperonic NX® (ein äthoxyliertes Nonylphenol) und 0,55 Teilen Supronic E800® (ein Äthylenoxyd/Propylenoxydblockcopolymer) in 15 Teilen Wasser und danach mit 9,2 Teilen Salzsäure (36%-ig). Im Verlauf von 15 Minuten lässt man dann die oben hergestellte alkalische Lösung von Naphthol AS-D® einlaufen, was eine milchigweisse Suspension ergibt. Diese wird dann mit 1,02 Teilen Natriumhydroxyd, in 9 Teilen Wasser gelöst, auf pH 10 gestellt. Die Lösung von diazotiertem 2,3-Dichloranilin gibt man dann gleichzeitig mit einer Lösung von 2,7 Teilen Natriumhydroxyd, in 27 Teilen Wasser gelöst, so dazu, dass die entstehende orangefarbige Suspension während der ganzen Zugabeperiode von 30 Minuten auf pH 10 gehalten wird.

Man gibt 10 Teile Vinapol 1640® (eine 35%-ige Lösung von Kaliumpolymethacrylat), in 15 Teilen Wasser gelöst, dazu und rührt die Suspension 15 Minuten lang, bevor man den pH mit 4,5 Teilen Salzsäure (36%-ig), in 3,5 Teilen Wasser gelöst, auf 1,8 stellt.

Man erhitzt die Suspension auf 90–95°C, filtriert und wäscht mit 50°C warmem, mit Citronensäure (0,5 g/l) angesäuertem Wasser, bis das Waschwasser chloridionenfrei ist. Der so erhaltene Filterkuchen wird bei 50–60°C getrocknet, was 18 Teile orangefarbiges Pulver ergibt, das 70% Produkt der Formel I enthält.

Beispiel 6

Man verfährt wie in Beispiel 5, jedoch mit dem Unterschied, dass die weisse Suspension der ausgefällten Kupplungskomponente statt auf pH 10 mit einer wässrigen Lösung Natriumhydroxyd auf pH 6,5 gestellt und während der Zugabe des diazotierten 2,3-Dichloranilins auf pH 6,5 gehalten wird. Dabei erhält man 18 Teile eines orangefarbigen Pulvers, das 70% Produkt der Formel I enthält.

Beispiel 7

Wie in Beispiel 5 bereitet man eine Lösung von diazotiertem 2,3-Dichloranilin. Eine Lösung von 2-Hydroxy-3-carboxynaphthalin-(2-methylphenyl)-amid wird wie in Beispiel 5 hergestellt, jedoch unter Verwendung von 8,52 Teilen Naphthol AS-D®. Eine Lösung von 0,9 Teilen Natriumacetat-trihydrat in 150 Teilen Wasser mit Zusatz einer Lösung von 2,44 Teilen Synperonic NX® (ein äthoxyliertes Nonylphenol) und 0,55 Teilen Supronic E800® (ein Äthylenoxyd/Propylenoxydblockcopolymer) in 15 Teilen Wasser wird mit verdünnter Salzsäure auf pH 6,5 gestellt.

Dann gibt man die Lösung des diazotierten 2,3-Dichloranilins und die alkalische Läsung von Naphthol AS-D® gleichzeitig bei pH 6–7 im Verlauf von 30 Minuten dazu, was eine orangefarbige Suspension ergibt, die man vor der Zugabe von 10 Teilen Vinapol 1640® (eine 35%-ige Lösung von Kaliumpolymethacrylat), in 15 Teilen Wasser gelöst, 15 Minuten lang rührt. Die Suspension wird 15 Minuten lang gerührt, mit verdünnter Salzsäure auf pH 1,8 gestellt, auf 90–95°C erhitzt, filtriert und mit 50°C warmem, mit Citronensäure (0,5 g/l) angesäuertem Wasser gewaschen, bis das Waschwasser chloridionenfrei ist. Der so erhaltene Filterkuchen wird bei 50–60°C getrocknet, was 18 Teile eines orangefarbigen Pulvers ergibt, das 70% Produkt der Formel I enthält.

Beipiel 8

Das Produkt aus Beispiel 5 erweist sich beim Einarbeiten in typische Dispersionsfarben einfach durch Rühren als leicht dispergierbar und zeigt in Abhängigkeit von der jeweils verwendeten Dispersionsfarbe eine bis zu 20% bessere Farbstärke gegenüber einer vordispergierten Paste von Pigment Orange 5 bei gleicher Pigmentierung, welche nach der gleichen Methode in dieselben Dispersionsfarben eingearbeitet wird.

Beispiel 9

Das Produkt aus Beispiel 6 erweist sich beim Einarbeiten in typische Dispersionsfarben einfach durch Rühren als leicht dispergierbar und zeigt in Abhängigkeit von der jeweils verwendeten Dispersionsfarbe eine bis zu 5% bessere Farbstärke gegenüber einer vordispergierten Paste von Pigment Orange 5 bei gleicher Pigmentierung, welche nach der gleichen Methode in dieselben Dispersionsfarben eingearbeitet wird.

Beispiel 10

Beim Einarbeiten in einen typischen Leinöllack, im Vergleich mit auf dieselbe Weise behandeltem Pigment Orange 5 bzw. Pigment Rot 4, liefert das Produkt aus Beispiel 2 eine Druckfarbe, die klarer und stärker als die aus Pigment Orange 5 und erheblich mehr orange als die aus Pigment Rot 4 ist, welche eine vergleichsweise blaue Nuance aufwies. Dieser klare und starke orange Farbton ist sehr verschieden von den deutlich roten Druckfarben, die man aus Pigment Rot 2 und Pigment Rot 112 erhält, welche strukturell der Verbindung der Formel I nahe verwandt sind.

Beispiel 11

Beim Einarbeiten der Produkte aus den Beispielen 3 und 4 in Druckfarben gemäss Beispiel 10, erhält man solche Druckfarben, die im Vergleich mit einer ähnlichen, aus Pigment Orange 5 hergestellten Druckfarbe klar und stark sind, trotz des verringerten Pigmentierungsgrads, wegen der in der Produkten aus Beispielen 3 und 4 vorhandenen Harze.

Beispiel 12

Beim Einarbeiten in ein Alkyd/Melamin/Formaldehydallzweckindustrieanstrichmittelsystem ergibt das Produkt aus Beispiel 2 eine Anstrichfarbe, die sich im Ton von nach der gleichen Arbeitsweise aus Pigment Rot 2 und Pigment Rot 112 hergestellten Anstrichfarbe unterscheidet (orange verglichen mit rot) und im Farbton den aus Pigment Orange 5 und Pigment Rot 4 erhaltenen näherkommt. Wird eine mit dem Anstrichmittel aus Produkt des Beispiels 2 gespritzte Metalltafel 30 Minuten bei 200°C eingebrannt, so ergibt sich nur ein geringer Verlust an Farbstärke und eine minimale Farbtonänderung gegenüber einer 30 Minuten bei 120°C eingebrannten Tafel, was einen annehmbaren Grad Hitzestabilität bei dieser Anwendung aufzeigt.

Die unter Verwendung von Anstrichmitteln, die aus Pigment Orange 5 und Pigment Rot 4 erzeugt wurden, hergstellten Tafeln zeigen jedoch schlechte Hitzestabilität bei 200°C, die sich durch deutliche Farbtonänderungen und Unverträglichkeit mit dem System zeigt. Die Hitzestabilität des Produkts aus Beispiel 2 in diesem System ist sogar noch derjenigen von Pigment Rot 2 und Pigment Rot 112 überlegen.

Beispiel 13

Wird das Produkt aus Beispiel 2 in einer Kugelmühle zu einem typischen lufttrocknenden Alkydinnenanstrichmittel vermahlen und mit auf die gleiche Weise behandeltem Pigment Orange 5 verglichen, so zeigt es eine sehr viel höhere Farbstärke und einen sehr ähnlichen Farbton.

Ähnliche, aus Pigment Rot 2, Pigment Rot 4 und Pigment Rot 112 hergestellte Anstrichmittel sind vergleichsweise deutlich rot.

**Ansprüche**

1. Pigment der Formel I

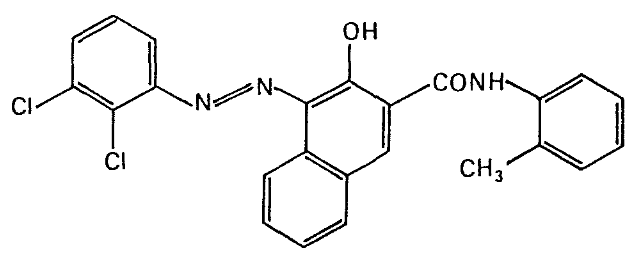

(I)

2. Verfahren zur Herstellung des Pigments der Formel I nach Anspruch 1, dadurch gekennzeichnet, dass man diazotiertes 2,3-Dichloranilin auf 2-Hydroxy-3-carboxynaphthalin-(2-methylphenyl)-amid kuppelt.

3. Verfahren nach Anspruch 2, dadurch gekennzeichnet, dass man zunächst das 2-Hydroxy-3-carboxynaphthalin-(2-methylphenyl)-amid in einer alkalischen Lösung auflöst, es dann bei saurem pH ausfällt, danach den pH auf einen zur Kupplung geeigneten Wert einstellt und anschliessend die Kupplungsreaktion durchführt.

4. Präparat, dadurch gekennzeichnet, dass es das Pigment der Formel I nach Anspruch 1 und mindestens 5 Gew.-%, bezogen auf das Gewicht des Pigments, eines aus einem oder mehreren, sich von Äthylenoxyd ableitenden, vorwiegend nicht-ionogenen Polyäthertensiden und aus einer polymeren Carbonsäure mit einem Molekulargewicht der freien Säure von mindestens 1500 gebildeten Komplexes enthält.

5. Präparat nach Anspruch 4, dadurch gekennzeichnet, dass es 60 bis 95 Gew.-% Pigment und 40 bis 5 Gew.-% Komplex enthält.

**Claims**

1. A pigment of the formula I

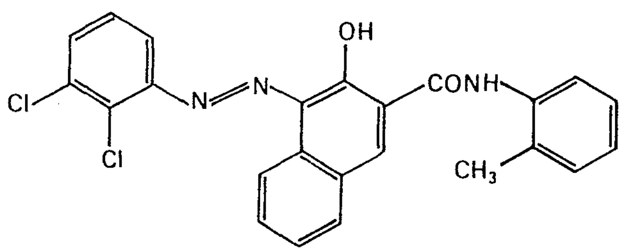

(I)

2. A process for producing the pigment of the formula I according to Claim 1, which process comprises coupling diazotised 2,3-dichloroaniline with 2-hydroxy-3-carboxynaphthalene-(2-methylphenyl)-amide.

3. A process according to Claim 2, which process comprises firstly dissolving the 2-hydroxy-3-carboxynaphthalene-(2-methylphenyl)-amide in an alkaline solution; then precipitating it at an acid pH value, subsequently adjusting the pH to a value suitable for coupling, and afterwards performing the coupling reaction.

4. A compositon comprising the pigment of the formula I according to Claim 1 and at least 5% by weight, relative to the weight of the pigment, of a complex formed from one or more predominantly nonionic polyether tensides derived from ethylene oxide, and a polymeric carboxylic acid having a molecular weight of the free acid of at least 1500.

5. A composition according to Claim 4, which comprises 60 to 95% by weight of pigment and 40 to 5% by weight of the complex.

**Revendications**

1. Pigment répondant à la formule (I)

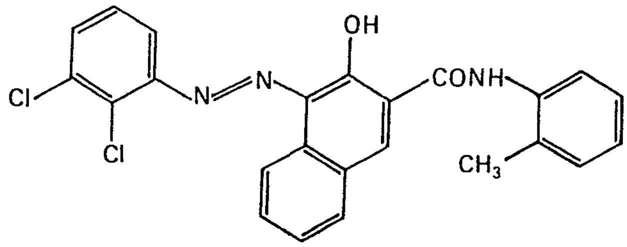

(I)

2. Procédé de préparation du pigment de formule (I) selon la revendication 1, procédé caractérisé en ce qu'on copule le diazoïque de la dichloro-2,3 aniline avec le (méthyl-2 phényl)-amide de l'acide hydroxy-2 naphtalène-carboxylique-3.

3. Procédé selon la revendication 2, caractérisé en ce qu'on dissout d'abord le (méthyl-2 phényl)-amide de l'acide hydroxy-2 naphtalène-carbocxylique-3 dans une solution alcaline, puis on le fait précipiter à un pH acide, après quoi on règle le pH à une valeur convenant pour la copulation et sensuite on effectue la réaction de copulation.

4. Composition caractérisée en ce qu'elle contient le pigment de formule (I) selon la revendication 1, et au moins 5% en poids, par rapport au poids du pigment, d'un complexe formé d'un ou plusieurs polyéthers surfactifs essentiellement non ionogènes et dérivant de l'oxyde d'éthylène et d'un acide carboxylique polymère ayant un poids moléculaire, à l'état d'acide libre, d'au moins 1500.

5. Composition selon la revendication 4, caractérisée en ce qu'elle contient de 60 à 95% en poids du pigment et de 40 à 5% en poids du complexe.